# EUROPÄISCHE PATENTSCHRIFT

(11) **EP 2 480 458 B1**
(45) Veröffentlichungstag und Bekanntmachung des Hinweises auf die Patenterteilung: **15.01.2014**
(21) Anmeldenummer: 10772953.5
(22) Anmeldetag: 03.09.2010
(51) Int. Cl.: B65B 9/22, B65B 51/26

(54) **FORMSCHULTER UND VORRICHTUNG ZUM HERSTELLEN VON SCHLAUCHBEUTELN**
FORMING SHOULDER AND APPARATUS FOR MAKING TUBULAR BAGS
ÉPAULEMENT DE FORMAGE ET DISPOSITIF DE FABRICATION DE SACS TUBULAIRES

(30) Priorität: 19.11.2009 DE 102009053415
(43) Veröffentlichungstag der Anmeldung: 01.08.2012
(73) Patentinhaber: Drut, Henry, 01099 Dresden (DE)
(72) Erfinder: Drut, Henry, 01099 Dresden (DE)
(74) Vertreter: Lippert, Stachow & Partner
(86) Internationale Anmeldenummer: PCT/DE2010/001047
(87) Internationale Veröffentlichungsnummer: WO 2011/060749

(56) Entgegenhaltungen:
- EP-A1- 1 340 679
- WO-A1-02/00502
- DE-A1-102007 049 703
- US-A- 4 532 754

## Beschreibung

Die Erfindung betrifft Verfahren und Vorrichtungen zum Herstellen eines Schlauchbeutels, beispielsweise eines sogenannten Stickpackbeutels mit seitlich versetzter Längsnaht.

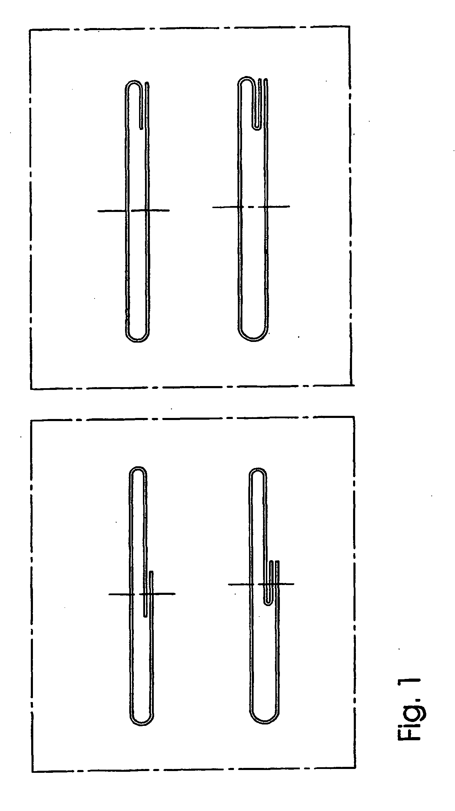

Der Begriff "seitlich versetzte Längsnaht" bedeutet dabei, dass der Nahtbereich bei einem durch Quernähte begrenzten Schlauchbeutel außerhalb der Mitte liegt, d.h. die Längsmittelebene des Beutels schneidet nicht den Überlappungsbereich der Bahnränder, die die Längsnaht, beispielsweise eine sogenannte Flossennaht oder eine Überlappnaht, bilden. In Fig. 1 sind die Querschnitte herkömmlicher, symmetrischer Beutelquerschnitte, bei denen die Naht in oder nahe der Mitte einer Seite des Beutels liegt, den hier behandelten asymmetrischen Beutelquerschnitten, bei denen die Längsnaht seitlich angeordnet ist, jeweils in der Ausführung mit einer Überlappnaht und einer Flossennaht, gegenübergestellt.

Die Herstellung eines Schlauchbeutels mit seitlich versetzter Längsnaht kann durch Formung des Schlauchquerschnittes aus einer ebenen Packstoffbahn, beispielsweise eine Folien- oder Papierbahn, mittels einer Formschulter oder anderer geeigneter Mittel, und Versiegelung der Längsnaht durch ein Längsschweißorgan zum Verschweißen der Bahnkanten, sowie das nachfolgende Verschließen der einzelnen aus dem so erzeugten Schlauch entstehenden Beutel mittels einer Querschweißeinrichtung erfolgen.

Aus der EP 1 340 679 A1 ist eine Formschulter zur Herstellung von sogenannten Dreiseiten-Siegelrand-Schlauchbeuteln bekannt. Diese ist derart ausgebildet, dass die Rückwand von einer Folieneinlaufkante aus und/oder die Innenflächen von Kanalabdeckungen in Foliendurchlaufrichtung und von den Kanalseitenbereichen aus sich zum unteren Ende eines Schlitzes hin asymptotisch annähernd ausgeformt sind.

Aktuell werden Stickpack-Schlauchbeutel, also Schlauchbeutelportionsverpackungen der Beutelbreite 8 bis 50 mm, mit einer in oder nahe der Mitte einer Seite des flach gedrückten Beutels befindlichen Längsnaht gefertigt. Die Nahtbreite bei Stickpacks ist im Verhältnis zur Beutelbreite relativ groß. Die Nahtseite des Beutels kann deshalb nur eingeschränkt für Werbe- und Informationszwecke genutzt werden. Bei Schlauchbeuteln der Normalformate (50 bis 250 mm) ist es sehr verbreitet, die Längsnaht aus diesen Gründen auf die Seite zu legen.

Dass sich dieses Merkmal bislang noch nicht im Stickpackbereich durchgesetzt hat, liegt daran, dass die Weiterverarbeitung der asymmetrischen Schläuche in herkömmlichen Schlauchbeutelmaschinen nur mit großem Aufwand zu realisieren ist, d.h. es wäre eine Sondermaschine für diese Formate zu entwickeln.

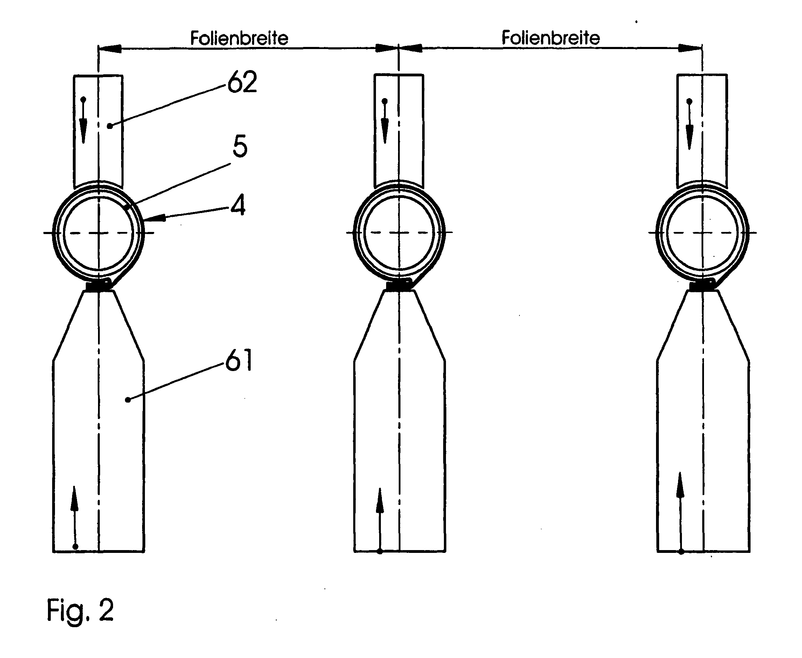

Anders als bei Schlauchbeutelmaschinen für Normalformate arbeiten Stickpackmaschinen stets mehrreihig, d.h. in der Stickpackmaschine werden nebeneinander mehrere Stickpacks geformt und befüllt. Bei Schlauchbeuteln, deren Längsnaht in der Mitte einer Seite des Schlauchquerschnitts angeordnet ist, können die Längsschweißorgane und gegebenenfalls Gegenhalter so angeordnet werden, dass sie quer zu der reihenförmigen Anordnung wirken, wie es in Fig. 2 dargestellt ist.

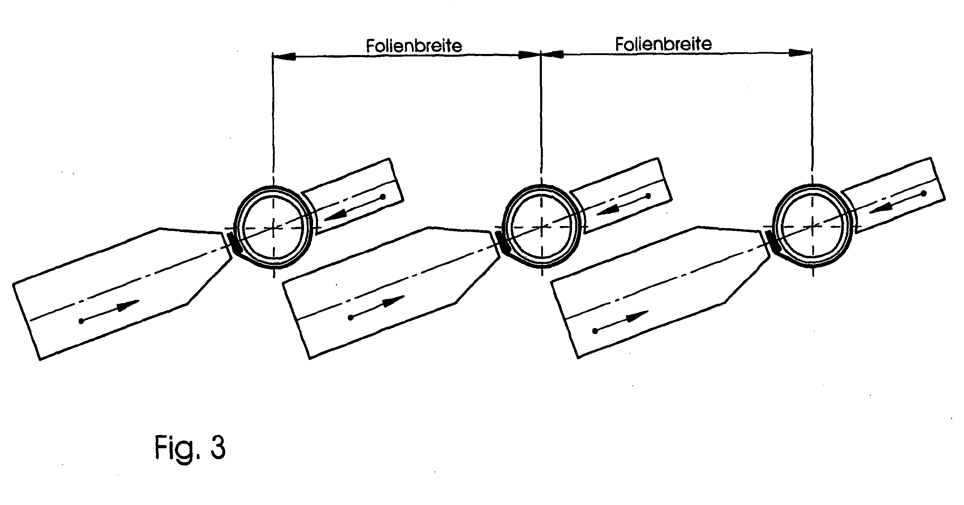

Soll die Längsnaht jedoch seitlich versetzt angeordnet werden, so bleibt zwischen den Formschultern zu wenig Platz zum seitlichen Positionieren der Längsschweißeinrichtung. Abweichend von der Lösung in der Standardmaschine für die Verschweißung eines symmetrischen Schlauches, müsste die Zustellung des Schweißwerkzeugs schräg erfolgen, wie es in Fig. 3 dargestellt ist. Dies wäre jedoch sehr aufwendig, weshalb es bisher keine maschinentechnische Realisierung dieser Anordnung gibt.

Es sind die beschriebenen technischen Schwierigkeiten zu überwinden, die bislang verhindert haben, dass Stickpackbeutel mit an der Seite liegender Längsnaht am Markt angeboten werden können.

Das verfahrenstechnische Problem bei der Entwicklung einer Formschulter für Stickpackbeutel mit seitlich liegender Längsnaht besteht darin, dass die Bahn (aus Folie oder Papier) aufgrund der summarisch größeren Umformungs- und Reibungskräfte auf der langen Seite, seitlich weggleitet. Die abgewickelte Linienlänge der auf der Formschulter umgelenkten Bahn ist ausgehend von der Mittellinie unterschiedlich lang. Der Arbeitswiderstand beim Umformen der Bahn auf der Formschulter wird im Wesentlichen durch Reibungs- und durch Verformungskräfte bestimmt. Dies soll durch Gestaltung der Formschultergeometrie so kompensiert werden, dass diese Kräfte ausgeglichen werden und das einseitige Weggleiten der Bahn verhindert wird.

Die einmal durch die Formschulter in Längsrichtung geformte Bahn hat nach dem Loslassen das Bestreben, sich wieder zu strecken. Bezüglich des Längsschweißens bestehen technologische Risiken in der Positionierung und Fixierung des Schlauches kurz vor dem Verschweißen. Dies soll durch optimale Gestaltung von Formschulter und Längsschweißeinrichtung, d.h. Längsschweißorgan und gegebenenfalls Gegenhalter sowie gegebenenfalls weiteren Fixierungsorganen, gesichert werden. Zur Lösung des Problems der asymmetrischen, d.h. seitlich versetzten Längsschweißung werden Verfahren und Vorrichtungen mit einem völlig neuen Ansatz zur Gestaltung der Formschulter vorgeschlagen.

Ein Verfahren zur Herstellung des Schlauchbeutels mit seitlich versetzter Längsnaht kann folgende Schritte umfassen:
1. Formung eines Schlauchs mit einer Längsnaht, die senkrecht zur Beutelmittelebene ausgerichtet ist, aus einem flächigen Material, beispielsweise einer Folienbahn,
2. Fixierung, d.h. Versiegeln der Längsnaht durch Längsschweißen mit einem Schweißorgan,
3. Zusammendrücken des Schlauches und gegebenenfalls Bildung einer Querschweißnaht mittels Querschweißeinrichtung.

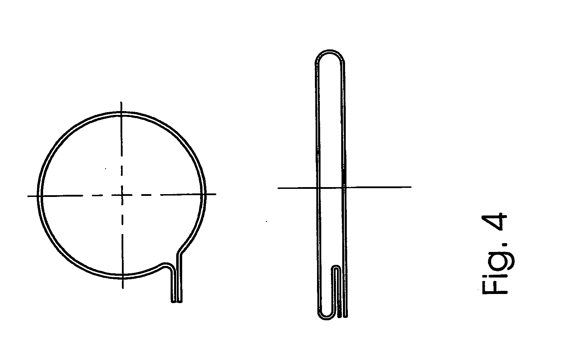

Die Auswirkung des dritten Verfahrensschritts ist in Fig. 4 dargestellt.

Die vorgeschlagene Formschulter zur Herstellung von Schlauchbeuteln mit an der Seite liegender Längsnaht kann an herkömmliche Schlauchbeutelmaschinen ohne zusätzlichen Aufwand angebaut werden, d.h. bereits vorhandene Maschinen können einfach nachgerüstet werden. Mittels der Formschulter wird ein asymmetrischer Folienschlauchquerschnitt hergestellt und durch Zusammendrücken bei Beibehaltung der Wirkungsrichtung der Längsschweißwerkzeuge in Standardmaschinen erzeugt.

Die herkömmlichen Probleme beim Verdrehen der Längsschweißorgane und, sofern vorhanden, der Gegenhalter werden dabei umgangen. Die Lösung kann auf Standardmaschinen realisiert werden. Es sind lediglich die Längsschweißorgane seitlich zu versetzen und gegebenenfalls ein angepasster Gegenhalter einzubauen.

Zur Überwindung der oben beschriebenen Probleme bei der Herstellung von Stickpacks mit seitlich versetzter Längsnaht, insbesondere bei der Anordnung mehrerer Formungs-Schweiß- und Befülleinrichtungen, wird nachfolgend eine Formschulter vorgeschlagen.

Mit einer nachfolgend beschriebenen Formschulter ist die Herstellung von Schlauchbeuteln mit seitlich versetzter Längsnaht in hoher Qualität möglich.

Zur anschaulichen Beschreibung der Erfindung werden nachfolgend verschiedene Begriffe verwendet, deren Bedeutung zunächst erklärt wird.

"Quadranten des Querschnitts des Prismateils" sind Sektoren dieses Querschnitts in der Draufsicht auf das Prismateil. Dabei denkt man sich den Ursprung eines globalen Koordinatensystems in die Mitte des Querschnitts des Prismateils und damit in die Mitte des entstehenden Schlauchquerschnitts. Die y-Achse des Koordinatensystems liegt parallel zur Einlaufrichtung der Packstoffbahn in die Formschulter, demzufolge verläuft die x-Achse des Koordinatensystems quer dazu und die z-Achse verläuft parallel zur Auslaufrichtung der Packstoffbahn. Bei symmetrischen Formschultern findet demnach die Nahtbildung auf der y-Achse zwischen dem dritten und vierten Quadranten statt.

Bei der hier betrachteten Herstellung von Schlauchbeuteln mit seitlich versetzter Längsnaht findet diese hingegen im dritten Quadranten (bei einer links der Mitte angeordneten Längsnaht) oder im vierten Quadranten (bei einer rechts der Mitte angeordneten Längsnaht), unter Umständen innerhalb dieser Quadranten auch sehr nahe an der x-Achse, d.h. nahe dem angrenzenden ersten oder zweiten Quadranten, statt. Zur Vereinfachung der Beschreibung wird - abweichend von der sonst üblichen Festlegung der Quadrantenzählung gegen den Uhrzeigersinn - nachfolgend stets der Quadrant, in dem die Naht gebildet wird, als vierter Quadrant bezeichnet, so dass die Quadranten bei einer links der Mitte angeordneten Längsnaht entgegen dem Uhrzeigersinn gezählt werden.

Weitere Kenngrößen, die zur Charakterisierung der Formschultern nachfolgend verwendet werden, sind "Faltwinkel", "Umformkantenwinkel", "Bahnlinien" und "Schulterlinien".

Eine Schulterlinie, die auch als wölbungsfreie Flächengerade bezeichnet wird, ist eine Gerade im Raum, die auf der Schulterfläche liegt. Das bedeutet, dass sie nicht nur in der Draufsicht auf die Schulterfläche, sondern auch in der Schnittansicht durch das Schulterteil oder aus einer beliebigen anderen Blickrichtung gerade ist. Bei den Formschultern der hier beschriebenen Art verlaufen Schulterlinien von jedem Punkt der Umformkante nach außen. Die Richtungen der Schultergeraden können zur Charakterisierung der beschriebenen Formschulter dienen, wie weiter unten noch näher ausgeführt wird.

Eine Bahnlinie hingegen ist eine in der Längsrichtung der unverformten Packstoffbahn verlaufend gedachte Gerade, die parallel zur Bahnkante verläuft. Damit sind die beiden Bahnkanten selbst die äußersten Bahnlinien. Auch der Verlauf der Bahnlinien auf der Schulterfläche kann zur Charakterisierung der beschriebenen Formschulter dienen, wie weiter unten noch näher ausgeführt wird.

Der Faltwinkel ist der Winkel, der zwischen dem noch auf der Schulterfläche befindlichen Abschnitt einer Bahnlinie und dem bereits im Prismateil befindlichen Abschnitt derselben Bahnlinie an dem Punkt der Umformkante gemessen wird, an dem der eine Abschnitt in den anderen übergeht.

Der Umformkantenwinkel ist hingegen der Winkel, der an einem Punkt der Umformkante zwischen der Schulterfläche und dem Prismateil in einer senkrechten Schnittebene, d.h. in einer Ebene, die von der z-Achse des oben beschriebenen globalen Koordinatensystems und einer in dem betrachteten Punkt rechtwinklig zur Umformkante verlaufenden Geraden aufgespannt wird, gemessen wird.

Der Faltwinkel ist demnach gleich dem Umformkantenwinkel, wenn in dem betrachteten Punkt der auf der Schulterlinie liegende Abschnitt einer Bahnlinie senkrecht, d.h. im rechten Winkel auf die Umformkante trifft. Ist dies nicht der Fall, so ist der Faltwinkel größer als der Umformkantenwinkel.

Bei einer Formschulter zur Umformung einer Packstoffbahn zu einem Schlauchbeutel mit einer seitlich versetzten Längsnaht, die ein Schulterteil und ein Prismateil umfasst, die entlang einer Umformkante miteinander verbunden sind, wobei die der einlaufenden Packstoffbahn zugewandte Hälfte der Umformkante im ersten und zweiten Quadranten des Querschnitts des Prismateils liegt und die Nahtbildung im vierten Quadranten erfolgt, wird vorgeschlagen, dass die Krümmung der Schulterfläche entlang der Bahnlinien der über die Schulterfläche laufenden Packstoffbahn betrachtet im zweiten und vierten Quadranten umso stärker wird, je näher die Bahnlinie am Rand der Packstoffbahn liegt.

Die Formschulter lässt sich alternativ auch folgendermaßen beschreiben: Der zwischen den Oberflächen des Schulterteils und des Prismateils gemessene Umformkantenwinkel nimmt vom zweiten zum dritten Quadranten ab und vom dritten zum vierten Quadranten wieder zu. Mit anderen Worten verlaufen die noch nicht in den Prismateil eingelaufenen Bereiche der Packstoffbahn auf der Oberfläche des Schulterteils im zweiten und vierten Quadranten relativ steil zum Prismateil, im dritten Quadranten hingegen relativ flach.

Anders ausgedrückt wird die Packstoffbahn im dritten Quadranten möglichst eng um das Prismateil geführt und im vierten Quadranten vom Prismateil abgespreizt, um dann im Bereich der Nahtbildung wieder steil auf das Prismateil zu geführt zu werden.

Die Formschulter kann jedoch auch durch die nachfolgende Formulierung beschrieben werden: Von der Umformkante ausgehende wölbungsfreie Flächengeraden im zweiten und vierten Quadranten nähern sich mit wachsender Entfernung vom Prismateil einander an. Daraus folgt unmittelbar, dass von der Umformkante ausgehende wölbungsfreie Flächengeraden im dritten Quadranten sich mit wachsender Entfernung vom Prismateil voneinander entfernen.

In einer ersten Ausgestaltung kann vorgesehen sein, dass der im ersten Quadranten liegende Abschnitt der Umformkante geradlinig quer zur Einlaufrichtung der Packstoffbahn verläuft und dadurch nicht in den vierten Quadranten hineinreicht. In einer alternativen zweiten Ausgestaltung kann hingegen vorgesehen sein, dass der vom dritten in den vierten Quadranten verlaufende Abschnitt der Umformkante steiler verläuft als der vom ersten in den vierten Quadranten verlaufende Abschnitt der Umformkante.

In den beschriebenen Fällen läuft eine Hälfte der Packstoffbahn entweder über eine quer zur Bahnlaufrichtung verlaufende Umformkante und die Umformung dieser Hälfte der Packstoffbahn in den zu erzeugenden Bahnquerschnitt erfolgt selbsttätig durch die Spannung in der Bahn, oder über einen Umformkantenabschnitt, der vom ersten in den vierten Quadranten reicht und dabei ein geringeres Gefälle aufweist als der gegenüberliegende Umformkantenabschnitt, der die andere Hälfte der Packstoffbahn vom zweiten über den dritten und bis in den vierten Quadranten der Umformkante zum Ort der Nahtbildung führt.

Weiter kann vorgesehen sein, dass der im ersten Quadranten liegende bzw. vom ersten in den vierten Quadranten verlaufende Abschnitt der Umformkante vor dem Ort der Nahtbildung endet. Die Packstoffbahn verläuft in dem Bereich zwischen dem Ende der Umformkante und dem Ort der Nahtbildung ohne physische Unterstützung durch Bestandteile der Formschulter. Um dies zu ermöglichen, muss die Formschulter so gestaltet sein, dass alle Bahnlinien im Umformbereich gleich lang sind.

In einer weiteren Ausgestaltung ist vorgesehen, dass unterhalb der Schulterfläche im vierten Quadranten ein erstes Führungselement zur Unterstützung der Bildung einer Längsnaht angeordnet ist. Das erste Umformelement kann dabei in der Längsrichtung des Prismateils betrachtet beispielsweise die Form eines Keils aufweisen oder plattenförmig sein. Die beiden Ränder der Packstoffbahn ragen an der Kante des ersten Führungselements aus dem geformten Querschnitt heraus und liegen aufeinander, so dass sie zu einer Längsnaht verschweißt werden können. Dabei kann das erste Führungselement auch als Gegenfläche für ein Schweißorgan dienen, oder das Schweißorgan ist unterhalb der Formschulter angeordnet.

Das erste Führungselement kann fester Bestandteil der Formschulter sein oder lösbar daran befestigt sein.

Weiter kann vorgesehen sein, dass die dem geformten Schlauchquerschnitt zugewandte Fläche des ersten Führungselements den Schlauchquerschnitt teilweise abbildet. Darunter soll verstanden werden, dass die Innenkontur des ersten Führungselements der Kontur des zu erzeugenden Schlauchquerschnitts in dem vom ersten Führungselement überdeckten Bereich des Prismateils entspricht. Mit anderen Worten bildet das erste Führungselement bei dieser Ausgestaltung einen Teil des schlauchbildenden Elements der Formschulter.

In einer weiteren Ausgestaltung ist vorgesehen, dass am Ende des Prismateils ein die Außenkontur des geformten Schlauchquerschnitts zumindest bereichsweise abbildendes zweites Führungselement zur Unterstützung der Bildung einer Längsnaht angeordnet ist. Hierbei handelt es sich um ein unterhalb des Bahnauslaufes aus der Formschulter angebrachtes Element, das dazu dient, die Packstoffbahn insbesondere bei der Einrichtung der Maschine so zu positionieren, dass ein bestimmungsgemäßer Durchlauf durch die Formschulter erzielt wird und die Bahnkanten so übereinanderliegen, dass sie zu einer Längsnaht versiegelt werden können.

Dabei kann beispielsweise vorgesehen sein, dass das zweite Führungselement zwischen einer Arbeitsposition, in der das zweite Führungselement den geformten Schlauchquerschnitt zumindest bereichsweise umgreift, und einer Einrichtposition, in der das zweite Führungselement vom geformten Schlauchquerschnitt entfernt angeordnet ist, bewegbar ist. Zum Einrichten der Maschine wird der Anfang der Packstoffbahn zunächst per Hand in die Formschulter eingeführt und so weit aus dem Bahnauslaufende des Prismateils gezogen, dass die Formung des Schlauchquerschnitts beginnen kann. Dabei befindet sich das zweite Führungselement in der Einrichtposition. Wenn der Anfang der Packstoffbahn am Bahnauslaufende der Formschulter so positioniert ist, dass es durch ein Schweißorgan oder/und eine Abzieheinrichtung ergriffen werden kann, wird das zweite Führungselement in die Arbeitsposition bewegt. Dadurch wird die exakte Führung der Packstoffbahn zwischen dem Bahnauslaufende des Prismateils und nachfolgenden Einrichtungen, beispielsweise einer Abzieheinrichtung, erleichtert, so dass auch die Bildung einer Längsnaht unterstützt wird.

Schließlich kann vorgesehen sein, dass das Schulterteil das Prismateil in zumindest einem Bereich unterhalb der Umformkante berührt. Abweichend von dem bei bekannten Formschultern bekannten Grundsatz, dass Schulterteil und Prismateil durchgängig entlang einer gemeinsamen Umformkante miteinander verbunden sind oder/und ineinander übergehen, gibt es bei dieser Ausgestaltung mindestens einen Abschnitt, in dem die eigentliche Umformkante durch das Prismateil allein gebildet wird. Das Schulterteil trifft in diesem Abschnitt unterhalb der Umformkante auf das Prismateil. Dies betrifft bei der oben beschriebenen Formschulter insbesondere den Übergangsbereich vom zweiten zum dritten Quadranten und, sofern in diesem Bereich überhaupt eine physische Umformkante vorgesehen ist, den Übergangsbereich vom ersten zum vierten Quadranten. Mit anderen Worten ist diese Ausgestaltung insbesondere in den Bereichen vorteilhaft anwendbar, in denen die Packstoffbahn eng, d.h. mit einem kleinen Umformkantenwinkel, um das Prismateil herumgeführt wird. Hierdurch werden zwei Dinge gleichzeitig erreicht: Erstens wird die Packstoffbahn im Umformbereich so geführt, dass alle Bahnlinien gleich lang sind, was eine Voraussetzung für eine knitterfreie Umformung ist. Zweitens wird die Spannung in der Packstoffbahn so stark erhöht, dass sich diese exakt in der vorgesehenen Art und Weise zu dem gewünschten Schlauchquerschnitt umformt.

Nachfolgend wird die Erfindung anhand von Ausführungsbeispielen und zugehörigen Zeichnungsfiguren näher erläutert. Dabei zeigen
Fig. 1 die Querschnitte herkömmlicher, symmetrischer Beutelquerschnitte und asymmetrischer Beutelquerschnitte in einer Gegenüberstellung,
Fig. 2 eine mehrreihig arbeitende Schlauchbeutelmaschine für die Verschweißung eines symmetrischen Schlauches mit gerader Zustellung des Schweißwerkzeugs,
Fig. 3 eine mehrreihig arbeitende Schlauchbeutelmaschine für die Verschweißung eines symmetrischen Schlauches mit schräger Zustellung des Schweißwerkzeugs,
Fig. 4 die Bildung eines asymmetrischen Schlauchquerschnitts und die Auswirkung des anschließenden Zusammendrückens durch eine Querschweißeinrichtung,
Fig. 6 eine Formschulter zur Umformung einer Packstoffbahn zu einem Schlauchbeutel mit einer seitlich versetzten Längsnaht in mehreren Ansichten,
Fig. 7 die Formschulter gemäß Fig. 6 mit einer darüber laufenden Packstoffbahn in mehreren Ansichten,
Fig. 9 die Formschulter gemäß Fig. 6 und 7 mit einer Schweißeinrichtung in perspektivischer Ansicht, und
Fig. 10 eine Formschulter zur Umformung einer Packstoffbahn zu einem Schlauchbeutel mit einer seitlich versetzten Längsnaht mit einem ersten und zweiten Führungselement.

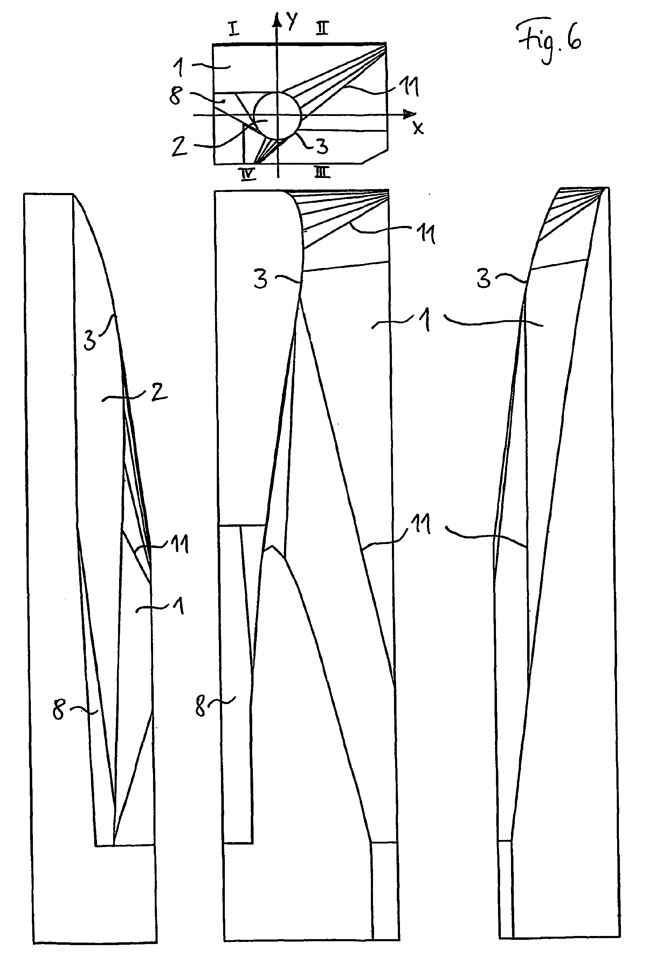

Die in Fig. 6 dargestellte Formschulter umfasst einen Schulterteil 1 und einen Prismateil 2. In der Draufsicht auf die Formschulter ist ein globales Koordinatensystem dargestellt. Die y-Achse liegt in der Einlaufrichtung der Packstoffbahn, während die x-Achse quer dazu ausgerichtet ist. Gemäß der oben getroffenen Vereinbarung erfolgt bei dieser Formschulter die Quadrantenzählung im Uhrzeigersinn.

Die Nahtbildung des gebildeten Schlauchs erfolgt im 4. Quadranten des Schlauchquerschnitts, d.h. des Querschnitts des Prismateils 2.

Der im ersten Quadranten liegende Abschnitt der Umformkante 3 verläuft geradlinig quer zur Einlaufrichtung der Packstoffbahn 4 und reicht dadurch nicht in den vierten Quadranten hinein. Der im ersten Quadranten liegende Abschnitt der Umformkante 3 endet damit vor dem Ort der Nahtbildung. Die Packstoffbahn 4 verläuft in dem Bereich zwischen dem Ende der Umformkante 3 und dem Ort der Nahtbildung ohne physische Unterstützung durch Bestandteile der Formschulter allein durch die in der Packstoffbahn 4 durch die Gestaltung der Formschulter erzeugte Spannung.

Auf der Oberfläche des Schulterteils 1 sind Schulterlinien 11 eingezeichnet. Diese Schulterlinien 11 sind wölbungsfreie Flächengeraden, d.h. Geraden im Raum. Wie in der Darstellung erkennbar ist, laufen diese im Ausführungsbeispiel im zweiten und vierten Quadranten von der Umformkante 3 ausgehend aufeinander zu, je weiter sie sich von der Umformkante 3 entfernen. Demgegenüber entfernen sich Schulterlinien 11, die von Punkten der Umformkante 3 im dritten Quadranten ausgehen, mit zunehmender Entfernung von der Umformkante 3 voneinander. Durch die Verengung der Schulterlinien 11 mit wachsendem Abstand von der Umformkante 3 im zweiten und vierten Quadranten wird dort die Krümmung der Schulterfläche 1 mit wachsendem Abstand von der Umformkante 3 stärker.

Im vierten Quadranten ist unterhalb der Schulterfläche 1 ein erstes Führungselement 8, das in der Draufsicht keilförmig ausgestaltet ist, zur Unterstützung der Bildung einer Längsnaht 42 angeordnet. Das erste Führungselement empfängt die nach der Umformkante 3 frei geformte Packstoffbahn 4 im Bereich des ersten und vierten Quadranten und unterstützt deren Umformung zu dem gewünschten Schlauchquerschnitt. Gleichzeitig unterstützt das erste Führungselement 8 die Bildung der Längsnaht 42, indem die beiden Ränder der Packstoffbahn 4 an der Kante des ersten Führungselements 8 aus dem geformten Querschnitt heraus ragen und auf der Außenseite des ersten Führungselements 8 so aufeinander liegen, dass sie zu einer Längsnaht 42 verschweißt werden können.

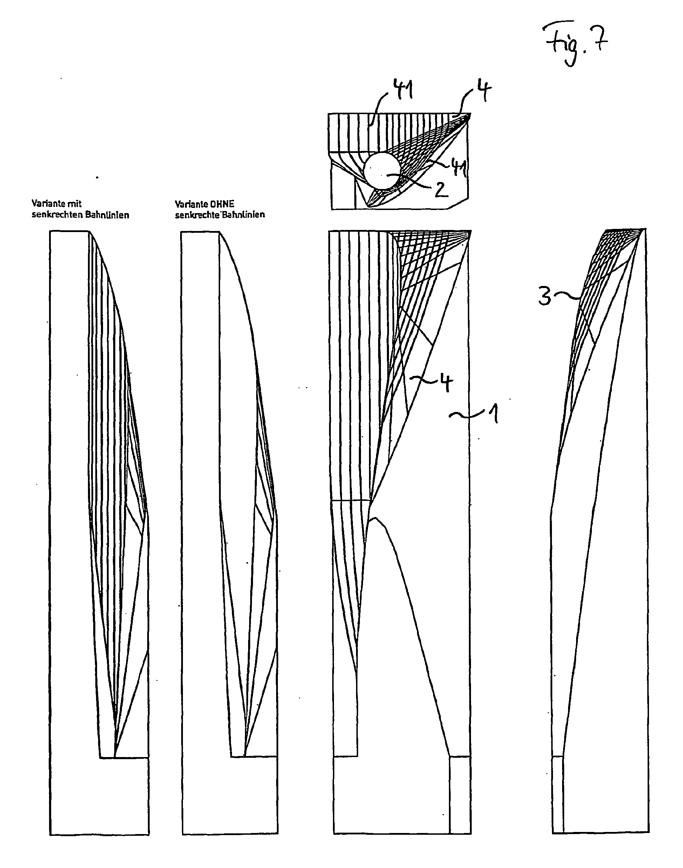

In Fig. 7 ist eine Packstoffbahn 4 dargestellt, die über die Formschulter geführt wird. Die auf der Packstoffbahn 4 parallel zum Rand der Packstoffbahn 4 verlaufend gedachten Bahnlinien 41 überlagern die Schulterlinien 11. Insbesondere in der Draufsicht auf die Formschulter ist erkennbar, dass die Bahnlinien 41 im dritten Quadranten sehr eng um das Prismateil 2 herumgeführt werden. Anschließend werden die Bahnlinien 41, die im vierten Quadranten noch nicht in das Prismateil 2 umgelenkt wurden, auf der Oberfläche des Schulterteils 1 nochmals vom Prismateil 2 weg geführt, d.h. abgespreizt. Die Krümmung der Schulterfläche 1 und damit der Packstoffbahn 4 ist, entlang der Bahnlinien 41 der über die Schulterfläche 1 laufenden Packstoffbahn 4 betrachtet, im zweiten und vierten Quadranten umso stärker, je näher die Bahnlinie 41 am Rand der Packstoffbahn 4 liegt.

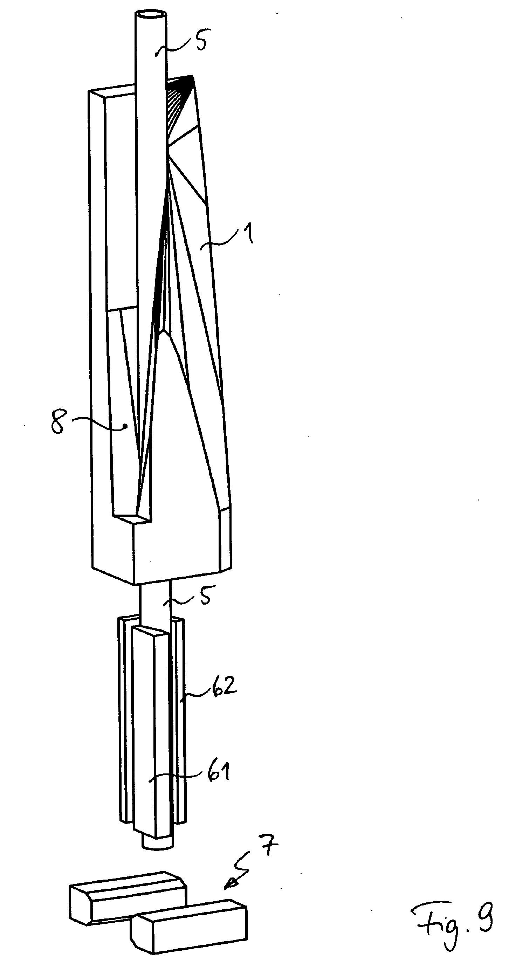

Die Darstellung der Fig. 9 zeigt die Formschulter gemeinsam mit einer Längsschweißeinrichtung 61, 62 und einer Querschweißeinrichtung 7, durch die der Schlauch quer gesiegelt und gegebenenfalls perforiert oder abgetrennt wird.

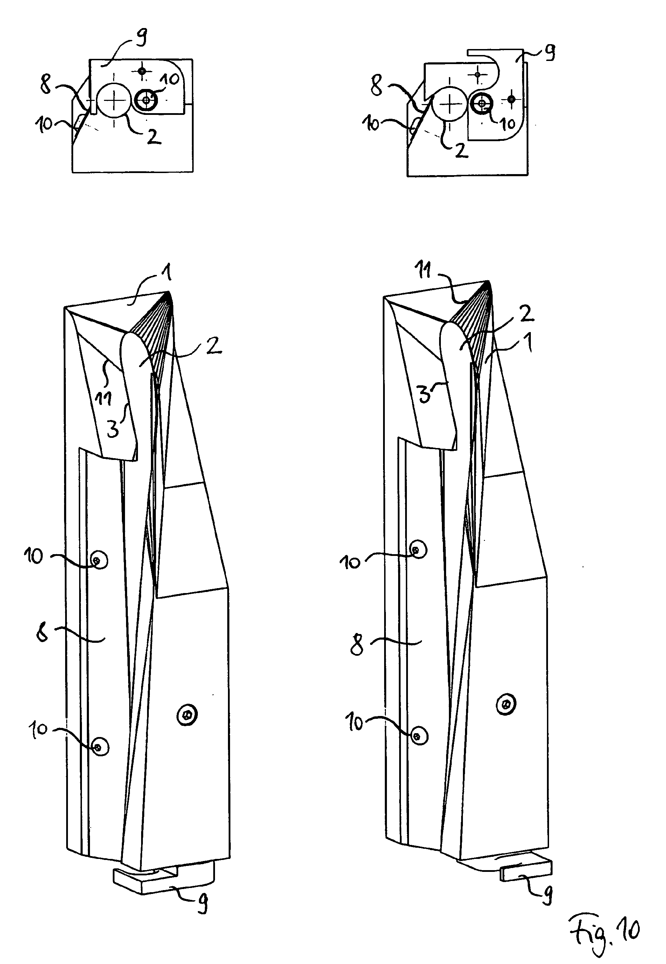

Fig. 10 zeigt eine weitere Formschulter. Bei dieser Formschulter reicht die Umformkante 3 vom ersten in den vierten Quadranten hinein, wobei der vom dritten in den vierten Quadranten verlaufende Abschnitt der Umformkante 3 steiler verläuft als der vom ersten in den vierten Quadranten verlaufende Abschnitt der Umformkante 3. Gleichzeitig endet der vom ersten in den vierten Quadranten verlaufende Abschnitt der Umformkante 3 vor dem Ort der Nahtbildung. Die Packstoffbahn 4 verläuft in dem Bereich zwischen dem Ende der Umformkante 3 und dem Ort der Nahtbildung ohne physische Unterstützung durch Bestandteile der Formschulter allein durch die in der Packstoffbahn 4 durch die Gestaltung der Formschulter erzeugte Spannung.

Im vierten Quadranten ist unterhalb der Schulterfläche 1 ein erstes Führungselement 8, das plattenförmig ausgestaltet und mit der Formschulter durch Schrauben 10 lösbar verbunden ist, zur Unterstützung der Bildung einer Längsnaht 42 angeordnet. Das erste Führungselement empfängt die nach der Umformkante 3 frei geformte Packstoffbahn 4 im Bereich des ersten und vierten Quadranten und unterstützt deren Umformung zu dem gewünschten Schlauchquerschnitt. Gleichzeitig unterstützt das erste Führungselement 8 die Bildung der Längsnaht 42, indem die beiden Ränder der Packstoffbahn 4 an der Kante des ersten Führungselements 8 aus dem geformten Querschnitt heraus ragen und auf der Außenseite des ersten Führungselements 8 so aufeinander liegen, dass sie zu einer Längsnaht 42 verschweißt werden können.

Am Ende des Prismateils 2 ist ein die Außenkontur des geformten Schlauchquerschnitts bereichsweise abbildendes zweites Führungselement 9 zur Unterstützung der Bildung einer Längsnaht angeordnet. Hierbei handelt es sich um ein unterhalb des Bahnauslaufes aus der Formschulter angebrachtes Element, das dazu dient, die Packstoffbahn 4 insbesondere bei der Einrichtung der Maschine so zu positionieren, dass ein bestimmungsgemäßer Durchlauf durch die Formschulter erzielt wird und die Bahnkanten so übereinanderliegen, dass sie zu einer Längsnaht 42 versiegelt werden können.

Das zweite Führungselement 9 ist zwischen einer Arbeitsposition (linke Darstellung), in der das zweite Führungselement 9 den geformten Schlauchquerschnitt zumindest bereichsweise umgreift, und einer Einrichtposition (rechte Darstellung), in der das zweite Führungselement 9 vom geformten Schlauchquerschnitt entfernt angeordnet ist, bewegbar ist. Im Ausführungsbeispiel handelt es sich um ein plattenförmiges Element mit einer dem Schlauchquerschnitt angepassten, in der Arbeitsposition am Schlauchquerschnitt anliegenden, im Ausführungsbeispiel daher bogenförmigen Kontur, welches mittels einer Schraube 10 schwenkbar an der Unterseite der Formschulter angebracht ist.

### Bezugzeichenliste

- 1: Schulterteil
- 11: Schulterlinie
- 2: schlauchbildendes Element Prismateil
- 3: Umformkante
- 4: Packstoffbahn
- 41: Bahnlinie
- 42: Längsnaht
- 5: schlauchbildendes Element Füllrohr
- 6: Längsschweißeinrichtung
- 61: Längsschweißorgan
- 62: Gegenhalter
- 7: Querschweißeinrichtung
- 8: erstes Führungselement
- 9: zweites Führungselement
- 10: Schraube

## Patentansprüche

1. Formschulter zur Umformung einer Packstoffbahn (4) zu einem Schlauchbeutel mit einer seitlich versetzten Längsnaht (42), umfassend ein Schulterteil (1) und ein Prismateil (2), die entlang einer Umformkante (3) miteinander verbunden sind, wobei die der einlaufenden Packstoffbahn (4) zugewandte Hälfte der Umformkante (3) im ersten und zweiten Quadranten des Querschnitts des Prismateils (2) liegt und die Nahtbildung im vierten Quadranten erfolgt, **dadurch gekennzeichnet, dass** von der Umformkante (3) ausgehende wölbungsfreie Flächengeraden (11) im zweiten und vierten Quadranten sich mit wachsender Entfernung vom Prismateil (2) einander annähern, und dass der zwischen den Oberflächen des Schulterteils (1) und der Innenseite des Prismateils (2) gemessene Umformkantenwinkel vom zweiten zum dritten Quadranten abnimmt und vom dritten zum vierten Quadranten wieder zunimmt.

2. Formschulter nach Anspruch 1, **dadurch gekennzeichnet, dass** der im ersten Quadranten liegende Abschnitt der Umformkante (3) geradlinig quer zur Einlaufrichtung der Packstoffbahn (4) verläuft und dadurch nicht in den vierten Quadranten hineinreicht.

3. Formschulter nach Anspruch 1, **dadurch gekennzeichnet, dass** der vom dritten in den vierten Quadranten verlaufende Abschnitt der Umformkante (3) steiler verläuft als der vom ersten in den vierten Quadranten verlaufende Abschnitt der Umformkante (3).

4. Formschulter nach einem der Ansprüche 1 bis 3, **dadurch gekennzeichnet, dass** der im ersten Quadranten liegende bzw. vom ersten in den vierten Quadranten verlaufende Abschnitt der Umformkante (3) vor dem Ort der Nahtbildung endet.

5. Formschulter nach Anspruch 4, **dadurch gekennzeichnet, dass** unterhalb der Schulterfläche (1) im vierten Quadranten ein erstes Führungselement (8) zur Unterstützung der Bildung einer Längsnaht (42) angeordnet ist.

6. Formschulter nach Anspruch 5, **dadurch gekennzeichnet, dass** die dem geformten Schlauchquerschnitt zugewandte Fläche des ersten Führungselements (8) den Schlauchquerschnitt teilweise abbildet.

7. Formschulter nach einem der Ansprüche 1 bis 6, **dadurch gekennzeichnet, dass** am Ende des Prismateils (2) ein die Außenkontur des geformten Schlauchquerschnitts zumindest bereichsweise abbildendes zweites Führungselement (9) zur Unterstützung der Bildung einer Längsnaht (42) angeordnet ist.

8. Formschulter nach Anspruch 7, **dadurch gekennzeichnet, dass** das zweite Führungselement (9) zwischen einer Arbeitsposition, in der das zweite Führungselement den geformten Schlauchquerschnitt zumindest bereichsweise umgreift, und einer Einrichtposition, in der das zweite Führungselement vom geformten Schlauchquerschnitt entfernt angeordnet ist, bewegbar ist.

9. Formschulter nach einem der Ansprüche 1 bis 8, **dadurch gekennzeichnet, dass** das Schulterteil (1) das Prismateil (2) in zumindest einem Bereich unterhalb der Umformkante (3) berührt.

## Claims

1. Forming shoulder for forming a packaging material web (4) into a tubular bag having a laterally offset longitudinal seam (42), comprising a shoulder part (1) and a prism part (2) mutually connected along a forming edge (3), wherein that half of the forming edge (3) which faces the incoming packaging material web (4) lies in the first and second quadrant of the cross section of the prism part (2) and the seam formation is realized in the fourth quadrant, **characterized in that** curve-free spatial straight lines (11) in the second and fourth quadrant, which radiate from the forming edge (3), converge with increasing remoteness from the prism part (2), and **in that** the forming edge angle measured between the surfaces of the shoulder part (1) and the inner side of the prism part (2) decreases from the second to the third quadrant and increases again from the third to the fourth quadrant.

2. Forming shoulder according to Claim 1, **characterized in that** that portion of the forming edge (3) which lies in the first quadrant runs in a straight line transversely to the inlet direction of the packaging material web (4) and thereby does not reach into the fourth quadrant.

3. Forming shoulder according to Claim 1, **characterized in that** that portion of the forming edge (3) which runs from the third into the fourth quadrant runs at a steeper angle than that portion of the forming edge (3) which runs from the first into the fourth quadrant.

4. Forming shoulder according to one of Claims 1 to 3, **characterized in that** that portion of the forming edge (3) which lies in the first quadrant or runs from the first into the fourth quadrant ends before the site of the seam formation.

5. Forming shoulder according to Claim 4, **characterized in that** beneath the shoulder surface (1) in the fourth quadrant is arranged a first guide element (8) for supporting the formation of a longitudinal seam (42).

6. Forming shoulder according to Claim 5, **characterized in that** that surface of the first guide element (8) which faces the shaped tube cross section partially reproduces the tube cross section.

7. Forming shoulder according to one of Claims 1 to 6, **characterized in that** at the end of the prism part (2) is arranged a second guide element (9) for supporting the formation of a longitudinal seam (42), which second guide element, at least in some regions, reproduces the outer contour of the shaped tube cross section.

8. Forming shoulder according to Claim 7, **characterized in that** the second guide element (9) is movable between a working position, in which the second guide element, at least in some regions, embraces the shaped tube cross section, and a set-up position, in which the second guide element is arranged remote from the shaped tube cross section.

9. Forming shoulder according to one of Claims 1 to 8, **characterized in that** the shoulder part (1) touches the prism part (2) in at least one region beneath the forming edge (3).

## Revendications

1. Épaulement de formage pour former une bande de matériau d'emballage (4) en un sac tubulaire pourvu d'un joint longitudinal (42) décalé latéralement, comportant une partie d'épaulement (1) et une partie prismatique (2) qui sont reliées l'une à l'autre le long d'une arête de formage (3), la moitié de l'arête de formage (3) tournée vers la bande de matériau d'emballage (4) entrante se situant dans le premier et le deuxième quadrant de la section transversale de la partie prismatique (2) et la formation du joint s'effectuant dans le quatrième quadrant, **caractérisé en ce que** des lignes de surface droites (11), dépourvues de courbure et partant de l'arête de formage (3), dans le deuxième et le quatrième quadrant, se rapprochent les unes des autres au fur et à mesure qu'elles s'éloignent de la partie prismatique (2), et **en ce que** l'angle d'arête de formage mesuré entre la surface de la partie d'épaulement (1) et le côté intérieur de la partie prismatique (2) diminue du deuxième au troisième quadrant et augmente à nouveau du troisième au quatrième quadrant.

2. Épaulement de formage selon la revendication 1, **caractérisé en ce que** la portion de l'arête de formage (3) située dans le premier quadrant s'étend de manière rectiligne transversalement à la direction d'entrée de la bande de matériau d'emballage (4) et ne s'étend par conséquent pas dans le quatrième quadrant.

3. Épaulement de formage selon la revendication 1, **caractérisé en ce que** la portion de l'arête de formage (3) s'étendant du troisième au quatrième quadrant présente une plus forte pente que la portion de l'arête de formage (3) s'étendant du premier au quatrième quadrant.

4. Épaulement de formage selon l'une quelconque des revendications 1 à 3, **caractérisé en ce que** la portion, située dans le premier quadrant ou s'étendant du premier au quatrième quadrant, de l'arête de formage (3) se termine avant l'emplacement de la formation du joint.

5. Épaulement de formage selon la revendication 4, **caractérisé en ce qu'**un premier élément de guidage (8) pour aider à la formation d'un joint longitudinal (42) est disposé en dessous de la surface d'épaulement (1) dans le quatrième quadrant.

6. Épaulement de formage selon la revendication 5, **caractérisé en ce que** la surface du premier élément de guidage (8) tournée vers la section transversale de sac formée reproduit partiellement la section transversale de sac.

7. Épaulement de formage selon l'une quelconque des revendications 1 à 6, **caractérisé en ce qu'**un deuxième élément de guidage (9) pour aider à la formation d'un joint longitudinal (42) est disposé à l'extrémité de la partie prismatique (2), lequel deuxième élément de guidage reproduit, au moins dans certaines régions, le contour extérieur de la section transversale de sac formée.

8. Épaulement de formage selon la revendication 7, **caractérisé en ce que** le deuxième élément de guidage (9) peut être déplacé entre une position de travail, dans laquelle le deuxième élément de guidage vient en prise au moins dans certaines régions autour de la section transversale de sac formée, et une position de réglage, dans laquelle le deuxième élément de guidage est disposé à distance de la section transversale de sac formée.

9. Épaulement de formage selon l'une quelconque des revendications 1 à 8, **caractérisé en ce que** l'épaulement de formage (1) est en contact avec la partie prismatique (2) dans au moins une région en dessous de l'arête de formage (3).
